# EUROPEAN PATENT APPLICATION

(11) **EP 1 500 860 A1**
(43) Date of publication of application: **26.01.2005**
(21) Application number: 03425492.0
(22) Date of filing: 22.07.2003
(51) Int. Cl.: F16L 21/03, F16L 25/10, F16L 17/035

(54) **Tight coupling system for elements of metal or plastic flues**

(71) Applicant: L.N. di NATALINI LINO & C. - S.r.l., 62010-Montecassiano (MC) (IT)
(72) Inventor: Natalini, Lino, 62100 Macerata (IT)
(74) Representative: Baldi, Claudio

(57) **Abstract**

The present invention refers to a tight coupling system for elements of metal or plastic flues, according to which a pipe mouthpiece (2) is provided with an external annular tooth (2a) that hooks a special gasket (1) shaped like an upturned U to be fitted astride the mouthpiece (2).

## Description

The present patent application for industrial invention refers to a tight coupling system for elements of metal or plastic flues.

The purpose of the invention is to reduce costs and improve the reliability of the systems that are currently used to guarantee tight sealing on the insertion points between pipe elements of ordinary metal flues.

In order to appreciate the benefits of the system according to the present invention, the technical solutions that have been adopted so far are illustrated below with drawbacks or limitations.

The most common, and probably the oldest system provides for an annular groove in the pipe mouthpiece, which houses a traditional rubber ring designed to be pressed between the two sections of pipe that are fitted one inside the other, thus ensuring tight coupling.

Although it is safe and reliable, this system is impaired by the cost of the groove that houses the gasket.

In order to provide a more economic solution, an alternative system provides for a special annular gasket, with cross-section shaped like an upturned U and designed to be placed astride the upper edge of the pipe mouthpiece.

When inserting one pipe section into another, the internal wing of the annular gasket is pressed between the two walls of the pipes, thus ensuring tight coupling.

Obviously, this second system is cheaper than the first one, since it requires no special processing for the housing that contains the annular gasket on the pipe mouthpiece, being the gasket simply placed astride the mouthpiece edge.

However, this system is impaired by the following drawback: because of adhesion around the internal pipe during uncoupling, the gasket is detached from the mouthpiece of the external pipe and requires the operator's intervention to be placed in the correct position for the next coupling operation.

Based on the drawbacks of the current art, the new tight coupling system of the invention for elements of metal or plastic flues has been devised. The system of the invention is economically convenient, since it does not require special processing on the pipe mouthpiece and guarantees gasket stability both during coupling and uncoupling operations.

The system of the invention provides for using an annular gasket with special profile, basically consisting in a collar with upper edge that protrudes outwards and is shaped like a hook.

According to the same system, the edge of the pipe mouthpiece is provided with an external annular tooth that is obtained with heading process at a very low cost.

According to the system of the invention, the gasket is applied on the pipe mouthpiece in such a way that the collar adheres to the internal walls of the mouthpiece, while the hook-shaped edge fits onto the external tooth of the mouthpiece.

During coupling, the gasket collar is pressed between the two pipes and is prevented from sliding inside the mouthpiece of the larger pipe, being the gasket held by the external edge against the mouthpiece edge.

During uncoupling, although it adheres to the smaller pipe, the gasket collar creates some friction on the external side of the smaller pipe, without adhering to it, since the entire gasket is hooked to the tooth located on the mouthpiece of the larger pipe.

For major clarity, the description of the system according to the present invention continues with reference to the enclosed drawings, which are intended for purposes of illustration and not in a limiting sense, whereby:
- Fig. 1 is a cross-section with an axial plane of two tubular elements for metal or plastic flues, arranged to be coupled using the tight coupling system of the invention.
- Fig. 2 is a cross-section of the annular gasket used in the tight coupling system of the invention.
- Fig. 3 is an enlarged view of Fig. 2.

With reference to the above figures, the system according to the present invention provides for an annular gasket (1), which comprises a collar (1a) provided with an upper edge (1b) that protrudes outwards and is shaped like a hook.

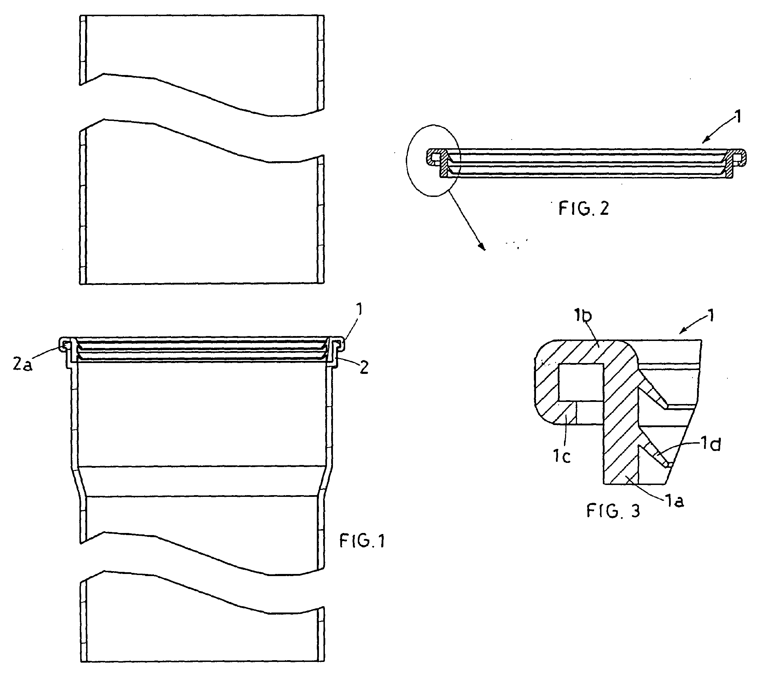

As shown in Fig. 3, the edge (1b) has a transversal C-shaped cross-section, with a lower inward tooth (1c), which is basically the ending section of the hook-shaped profile.

The internal wall of the collar is provided with elastically flexible annular wings (1d) that protrude towards the bottom of the collar.

According to the system, the mouthpiece(2) of the pipe is provided with an external annular tooth (2a).

The gasket (1) is applied on the mouthpiece (2) of the pipe in such a way that the collar (1a) adheres to the internal walls of the mouthpiece, while the hook-shaped edge (1b) engages the external tooth (2a) of the mouthpiece(2) with the tooth (1c), as shown in Fig. 1.

During pipe coupling, the collar (1) of the gasket is pressed between the two pipes and is prevented from sliding inside the mouthpiece (2) of the larger pipe, since the gasket (1) is held astride the edge of the mouthpiece (2).

The wings (1d) are pressed to ensure perfect sealing of the coupling system.

During uncoupling, the wings (1d) create friction on the external side of the pipe which is uncoupled from the mouthpiece (2), without the possibility of adhering to it, since the entire gasket (1) is fitted to the tooth (2) of the mouthpiece (2) in a stable way.

## Claims

1. Tight coupling system for elements of metal or plastic flues comprising:
- an external annular tooth (2a) on the mouthpiece (2) of the pipe (2a).
- a gasket (1) composed of a collar (1a) provided with an upper edge (1b) that protrudes outwards and is shaped like a hook;
being **characterised in that** the gasket (1) is applied on the mouthpiece (2) of the pipe in such a way that the collar (1a) adheres to the internal walls of the mouthpiece (2), while the hook-shaped edge (1b) engages the external tooth (2a) of the mouthpiece (2).

2. System as defined in claim 1, **characterised in that** the collar (1a) of the gasket (1) is internally provided with elastically flexible annular wings (1d) that protrude towards the bottom of the collar.
